# EUROPÄISCHE PATENTSCHRIFT

(11) **EP 3 623 735 B1**
(45) Veröffentlichungstag und Bekanntmachung des Hinweises auf die Patenterteilung: **21.10.2020**
(21) Anmeldenummer: 19197182.9
(22) Anmeldetag: 13.09.2019
(51) Int. Cl.: F26B 3/04, F26B 3/18, F26B 5/14, F26B 17/20

(54) **RECYCLING-VORRICHTUNG**
RECYCLING DEVICE
DISPOSITIF DE RECYCLAGE

(30) Priorität: 13.09.2018 DE 102018122406
(43) Veröffentlichungstag der Anmeldung: 18.03.2020
(73) Patentinhaber: Stimmler, Reinhard, 78628 Rottweil-Neufra (DE)
(72) Erfinder: Stimmler, Reinhard, 78628 Rottweil-Neufra (DE)
(74) Vertreter: Patentanwälte und Rechtsanwalt Weiß, Arat & Partner mbB

(56) Entgegenhaltungen:
- CN-A- 105 627 722
- CN-U- 203 869 464
- JP-A- 2005 211 700
- JP-A- 2016 107 227

## Beschreibung

### Technisches Gebiet

Die Erfindung betrifft eine Recycling-Vorrichtung nach dem Oberbegriff des Anspruchs 1.

### Stand der Technik

Derartige Recycling-Vorrichtungen sind bereits in vielfältiger Form und Ausgestaltung bekannt und gebräuchlich.

In diesem Zusammenhang wird auf die JP 2005 211700 A verwiesen, welche eine Recycling-Vorrichtung mit einer hohlen Förderschnecke beschreibt, wobei die Förderschnecke aus einem ersten Zylinder mit einem geringeren Durchmesser, einem Trichter und einem anschliessenden zweiten Zylinder mit einem größeren Durchmesser beschreibt. Eine ähnliche Vorrichtung beschreibt auch die CN 203869464 U.

In der CN 105627722 A und der JP 2016-107227 A ist jeweils eine zylindrische Förderschnecke gezeigt.

So wird beispielsweise in der DE 20 2015 003 284 U1 eine Vorrichtung zum Komprimieren und/oder Entwässern von pressbaren Feststoffen, insbesondere Biomasse, wie Holzhackschnitzel, Rinde oder dergleichen Materialien offenbart, wobei die Vorrichtung aus einem Grundrahmen mit Aufnahmetisch, Pressvorrichtung, Entleervorrichtung, einer Befüllvorrichtung, sowie einer relativ zum Aufnahmetisch rotierenden Trommel mit hierin befindlichen, ummantelten und perforierten Behältern, sowie einer Wasser-Abführvorrichtung besteht. Weiter wird auf die DE 10 2014 002 775 A1 hingewiesen, welche eine Vorrichtung zum Pressen von Biomasse bestehend aus einem zylindrischen Verfahrensteil mit zylindrischer Kompressionsschnecke, einer konische Kompressionszone und einer zylindrischen Austragsschnecke mit nachfolgender Drossel und Stau- und Verweilzone besteht.

### Aufgabe der Erfindung

Die Aufgabe der vorliegenden Erfindung ist es, die Nachteile aus dem Stand der Technik zu überwinden. Insbesondere soll eine Recycling-Vorrichtung bereitgestellt werden, die mit einer Flüssigkeit beispielsweise einem Kühlschmiermittel behaftete Abfälle insbesondere aus der industriellen spanabhebenden Bearbeitung von Kunststoffen und Metallen, insbesondere Aluminium aber auch anderer Materialien zu trocknen und zu komprimieren oder nicht mit Kühlschmiermitteln beaufschlagte Abfälle aus der spanabhebenden Bearbeitung zu komprimieren.

Insbesondere Kunststoffspäne fallen durch geringes Volumengewicht auf. Darüber hinaus gestaltet es sich bei der derzeitigen Praxis als schwierig bis unmöglich diese Kunststoffspäne mit bekannten Verfahren von der anhaftenden Flüssigkeit zu trennen. Aus diesem Grund ist eine stoffliche Verwertung derzeit kaum realisierbar. Die thermische Verwertung ist durch den Brennwert der nicht komprimierten Abfälle schlecht und nicht lohnenswert. Durch die erfindungsgemässe Recycling-Vorrichtung sollen flüssige Rückstände weitestgehend bis vollständig abgeschieden und ein Ausgangsmaterial soweit komprimiert, dass der logistische Aufwand minimiert werden soll und das Volumen-Gewichts-Verhältnis optimiert werden soll. Weiter soll die Transportfähigkeit verbessert werden und/oder zumindest die thermische Verwertung weiter verbessert wird.

### Lösung der Aufgabe

Zur Lösung der Aufgabe führen die Merkmale nach dem Anspruch 1.

Vorteilhafte Ausgestaltungen sind in den Unteransprüchen beschrieben.

Die erfindungsgemässe Recycling-Vorrichtung weist eine Förderschnecke und eine Füllkammer auf. Dabei wird die Füllkammer von einem Gehäuse umfasst. Die Förderschnecke reicht dabei aus dem Gehäuse in ein Schneckengehäuse hinein. Die Förderschnecke umfasst einen Antrieb und eine Antriebswelle.

Dabei ist die Förderschnecke hohl ausgeführt und besteht aus einem ersten Zylinder mit einem geringeren Durchmesser, einem Trichter und einem anschliessenden zweiten Zylinder mit einem größeren Durchmesser besteht.

Die Recycling-Vorrichtung dient der Wiederverwertbarkeit eines Ausgangsmaterials, insbesondere von mit einer Flüssigkeit kontaminiertem Kunststoff. Bei dem Ausgangsmaterial handelt es sich um Kunststoff- oder Metallreste, die mit einer Flüssigkeit kontaminiert sind. Als Metallrest kommt vor allem Aluminium in Frage.

Das Ausgangsmaterial wird in der Füllkammer aufgegeben und von der Förderschnecke erfasst. Das Ausgangsmaterial soll eine gewisse Verweildauer in der Füllkammer aufweisen, um die Hauptflüssigkeit durch einen Siebboden abtropfen zu lassen. Dazu weist das Gehäuse den Siebboden auf.

Ab der Erfassung durch die Förderschnecke wird das Ausgangsmaterial in das Schneckengehäuse in Form eines Reaktionsrohrs befördert. Die Förderschnecke ist im Zuführbereich also im Bereich des ersten Zylinders mit abgesenkten Bohrungen in Form von Durchtrittsöffnungen versehen um den Flüssigkeitsaustrag weiter zu optimieren. Dieser Bereich kann einer leichten Kühlung unterliegen um eine Kondensation zu erreichen.

Im Vorkomprimierungsbereich, also im Bereich des Trichters erfolgt eine Aufheizung des Ausgangsmaterials in Richtung Siedepunkt der Flüssigkeit, beispielsweise eines Kühlschmiermittels. Im Bereich des Trichters weist die Förderschnecke einen Wärmeauslass auf. Der Wärmeauslass ist in Form von erhabenen Bohrungen ausgeführt.

Ab hier wird das Ausgangsmaterial mit Druckluft beaufschlagt welche in die Bearbeitungskammer/Schneckenkomprimierung rückwärts in den Förderbereich strömt. Dort kann die Flüssigkeit ggf. kondensieren. Die Druckluft ist ggf. erhitzt. Das Ausgangsmaterial ist in diesem Bereich noch nicht soweit verdichtet, dass eine Behinderung des Luftstroms gegeben wäre. Im Inneren der Förderschnecke im Bereich des ersten Zylinders befindet sich eine Austragsschnecke in Form einer Innenschaufel, welche die Flüssigkeiten und Störstoffe zurück in die Füllkammer oder über einen Flüssigkeitsabtransport aus der Recycling-Vorrichtung hinaus befördert. Um die Flüssigkeit und die Druckluft auszuleiten befinden sich zuvor beschriebene Bohrungen am Schneckengehäuse.

Das nun größtenteils bzw. komplett gereinigte Ausgangsmaterial gelangt in den abschließenden Komprimierungsbereich, also den zweiten Zylinder. Hier nun wird das Ausgangsmaterial soweit erhitzt bis zumindest die Oberfläche anschmilzt oder je nach Anwendung das Ausgangsmaterial aufgeschmolzen wird. Im Weiteren Fortlauf wird das Ausgangsmaterial im Bereich des zweiten Zylinders soweit komprimiert, dass beim Austrag ein stabiles komprimiertes Granulat oder kleine Brocken abgegeben werden.

Den Anforderungen entsprechend ist die Zugabe von Trenn- und Reinigungssubstanzen möglich.

Im Einzelnen werden zwei ablaufende Prozesse im Einzelnen wie folgt behandelt:
Ausgangsmaterial: Das Ausgangsmaterial wird von anhaftenden Flüssigkeiten befreit, erhitzt und komprimiert. Hieraus ergibt sich eine Verringerung des Transportvolumens um bis zu 70 % und mehr. Gleichzeitig wird das Ausgangsmaterial hinsichtlich der weiteren Verwertung optimiert. Stoffliche Verwertung wird dadurch überhaupt erst denkbar. Auch die thermische Verwertung wird hinsichtlich Brennwert und Volumen/Einsatzgewicht optimiert. Der zur Bevorratung benötigte Raum wird verringert, was wiederum zu Vorteilen beim Transport führt.

Störstoffe: Kühlschmiermittel ist bei der Verwertung von Sekundärrohstoffen insbesondere Kunststoffen unerwünscht bzw. verhindert, dass der Rohstoff dem Recycling zugeführt werden kann. Auf der anderen Seite ist er jedoch bei der Bearbeitung notwendig um angestrebte Ergebnisse zu erzielen. Durch die erfindungsgemässe Vorrichtung wird das Ausgangsmaterial bestehend aus Kunststoffspänen und Kühlschmierstoff aufgetrennt. Zunächst geschieht dies durch die Möglichkeit des Abtropfens bzw. einer Ruhephase im Bereich der Füllkammer. Anschliessend wird im Bereich des ersten Zylinders durch Umwälzen eine leichte Volumen-Verringerung/erreicht.

Bis hin zum Bereich des Trichters, welcher in entgegengesetzter Richtung zum zur Materialförderung mit Druckluft Und/oder Wärme beaufschlagt ist. Somit wird Flüssigkeit verdampft und per Luftstrom zurückbefördert zum ersten Zylinder, wo die Flüssigkeit in den Innenbereich des ersten Zylinders geführt wird ausgetragen wird. Der Kühlschmierstoff kann ggf. flüssigkeitsbereinigt neu aufgemischt und wiederverwendet werden oder entsprechend entsorgt werden.

Weiter ist eine erste Wärmesperre und/oder erste Drucksperre zwischen dem ersten Zylinder und dem Trichter und eine zweite Wärmesperre und/oder zweite Drucksperre zwischen dem Trichter und dem zweiten Zylinder angeordnet sind. Dadurch kann die Wärme und/oder der Druck kontrolliert im Bereich des Trichters eingesetzt werden.

Der erste Zylinder weist eine erste Schaufel auf, welches in einem bevorzugten Ausführungsbeispiel spiralförmig angeordnet ist. Der Trichter weist eine zweite Schaufel auf, die bevorzugt ebenfalls spiralförmig ist. Der zweite Zylinder weist eine dritte Schaufel auf. Die bevorzugt ebenfalls spiralförmig ist. Die erste Schaufel und die zweite Schaufel und die dritte Schaufel erstrecken sich bis zu einer Innenwand des Schneckengehäuses. Dabei reicht ein Teil der ersten Schaufel aus der Füllkammer in das Schneckengehäuse hinein.

Das Schneckengehäuse weist endseitig einen Auslasssieb auf. Dort wird das Endprodukt nach dem Bearbeitungsvorgang aus herausgedrückt.

Der Trichter weist eine Wärmezuführeinrichtung in Form einer Wärmeleitung und/oder eine Druckzuführeinrichtung in Form einer Druckleitung in einem Innenraum Teil der Förderschnecke und einen Wärmeauslass bzw. einen Druckauslass auf einer Aussenhaut des Trichters auf. Dabei kann der Wärmeauslass auch als Druckauslass dienen. Es können aber auch baulich unterschiedliche Auslässe vorhanden sein. In einem Ausführungsbeispiel ist die Wärme- und/oder Druckleitung von einem Antrieb aus in der Welle bis zu dem Innenraum des Trichters angeordnet. In einem anderen Ausführungsbeispiel kann die Wärme- und/oder Druckleitung auch von dem Auslasssieb aus in den Innenraum des Trichters zugeführt werden. Dabei ist der Innenraum des Trichters durch eine erste Wärmesperre und/oder erste Drucksperre hin zu dem ersten Zylinder und durch eine zweite Wärmesperre und/oder zweite Drucksperre hin zu dem zweiten Zylinder abgesperrt. Dabei ist es unbeachtlich, ob die Wärme- und/oder Druckleitung von einem Antrieb aus oder von einem Auslasssieb aus zu dem Innenraum des Trichters geführt wird.

In dem ersten Zylinder ist eine Innenschaufel hin zu der Antriebswelle angeordnet. Die Innenschaufel ist ebenfalls spiralförmig und dient dem Abtransport von in die Antriebswelle gebrachte Flüssigkeit bzw. der Störstoffe. Der erste Zylinder weist dazu Durchtrittsöffnungen in der Zylinderwand auf. Der erste Zylinder kann einen Flüssigkeitsabtransport umfassen.

Erfindungsgemäss findet folgendes Verfahren zur Durchführung eines Arbeitsdurchlaufs mit einer Recycling-Vorrichtung für ein mit einer Flüssigkeit kontaminiertes verschmutztes Ausgangsmaterial nach einem der Ansprüche 1 bis 4 mit folgenden Schritten statt:
- das verschmutzte Ausgansmaterial wird in die Füllkammer gebracht;
- das verschmutzte Ausgangsmaterial wird mit der Förderschnecke in Richtung des Auslasssiebs befördert;
- das verschmutzte Ausgangsmaterial wird von dem ersten Zylinder (5) der Förderschnecke erfasst;
- das verschmutzte Ausgangsmaterial wird anschliessend im Bereich des Trichters erwärmt und/oder mit Druck beaufschlagt und komprimiert, wobei die Wärme und der Druck aus dem Innenraum über den Wärmeauslass und/oder den Druckauslass in das Schneckengehäuse tritt;
- anschliessend wird das verschmutzte Ausgangsmaterial durch den zweiten Zylinder weiter komprimiert und tritt als Endprodukt aus dem Auslasssieb aus;
- währenddessen tritt die Flüssigkeit aus dem Siebboden des Gehäuses und/oder aus dem Flüssigkeitsabtransport des ersten Zylinders aus.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine Stirnansicht der erfindungsgemässen Recycling-Vorrichtung (V);
- Figur 2: eine an der Schnittlinie A-A geschnittene Ansicht der Figur 1;

### Ausführungsbeispiel

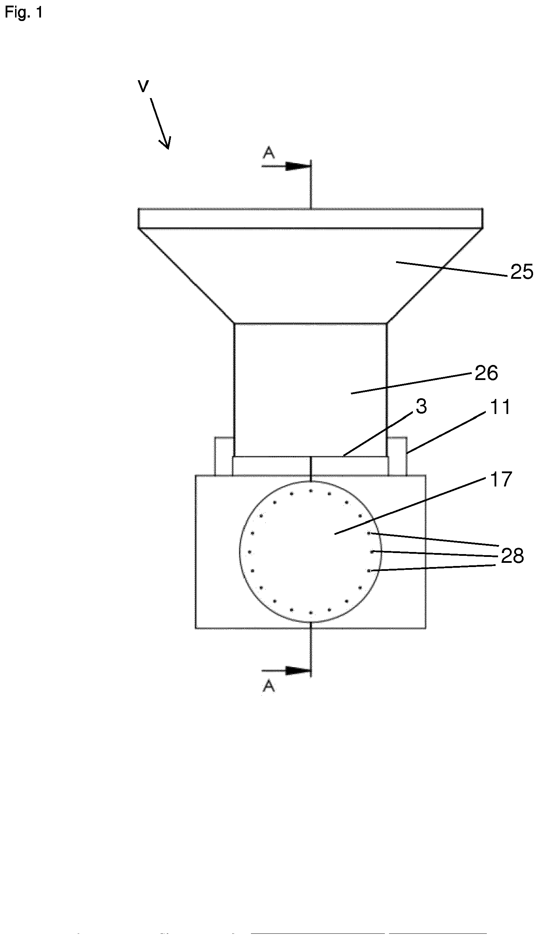

In Figur 1 ist eine erfindungsgemässe Recycling-Vorrichtung V in Stirnansicht dargestellt. Dort ist ein Gehäuse-Einlass 25 gezeigt. An den Gehäuse-Einlass 25 schliesst sich eine Zuführung 26 an, welche wiederum in ein Gehäuse 3 einmündet. Ausserdem ist ein Auslasssieb 17 gezeigt, wobei das Auslasssieb 17 randseitig kreisrunde Auslasslöcher 28 aufweist, durch welche ein Endprodukt nach dem erfindungsgemässen Verfahren austritt. Weiter ist eine Schnittlinie A-A gezeigt.

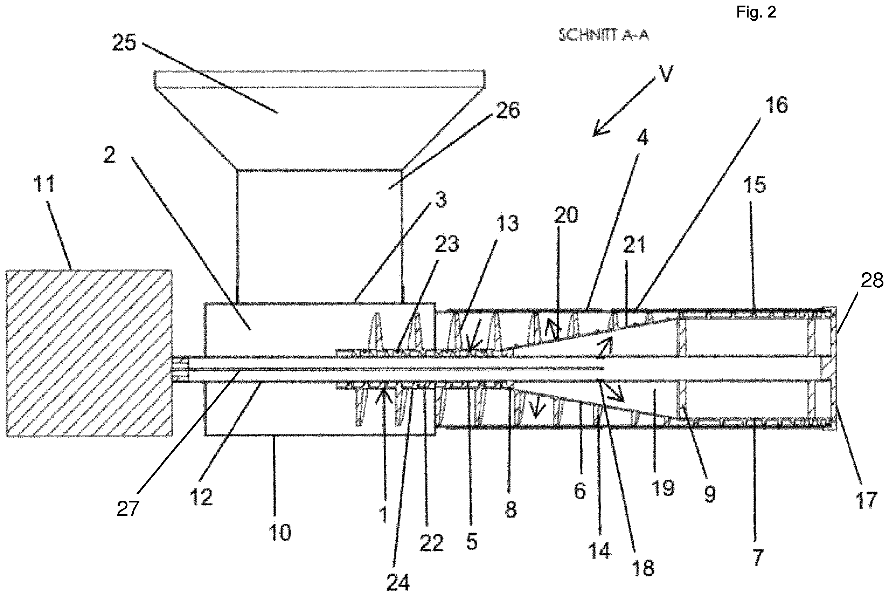

In Figur 2 ist die an der Schnittlinie A-A orientierte geschnittene Seitenansicht der erfindungsgemässen Recycling-Vorrichtung V.

Dort ist zentral das Gehäuse 3 angeordnet. Das Gehäuse 3 umfasst an einer Schwerkraftrichtung einen Siebboden 10. Gegenüber des Siebbodens 10 ist die Zuführung 26 und oberhalb davon der Gehäuse-Einlass 25 angeordnet. Das Gehäuse 3 umschliesst eine Füllkammer 2.

In der Füllkammer 2 ist eine Antriebswelle 12 angeordnet. Die Antriebswelle 12 reicht einends in den Antrieb 11. Andernends erstreckt sich die Antriebswelle 12 bis hin zu dem Auslasssieb 17.

Auf der Antriebswelle 12 ist eine Förderschnecke 1 angeordnet. Die Förderschnecke 1 teilt sich in drei Abschnitte auf. Dabei handelt es sich um einen ersten Zylinder 5, einen Trichter 6 und einen zweiten Zylinder 7.

Der erste Zylinder 5 weist eine Zylinderwand 24 auf. Der erste Zylinder 5 ist hohl, wobei die Antriebswelle 12 in dem ersten Zylinder 5 angeordnet ist. Die Antriebswelle 12 wiederum ist ebenfalls hohl ausgebildet, sodass in der Antriebswelle 12 eine Wärmeleitung 27 angeordnet sein kann, welche sich von dem Antrieb 11 bis hin zu einem Innenraum 19 des Trichters 6. Die Wärmeleitung 27 weist im Bereich des Innenraums 19 eine Wärmezuführeinrichtung 18 auf. Der Innenraum 19 ist durch eine erste Wärmesperre 8 und/oder erste Drucksperre hin zu dem ersten Zylinder 5 und durch eine zweite Wärmesperre 9 und/oder zweite Drucksperre hin zu dem zweiten Zylinder 7 abgesperrt.

Die Wärmezuführeinrichtung 18 weist in der Figur 2 verschiedene Pfeile auf, die den Fluss der Wärme und/oder des Drucks andeuten sollen. Dabei kann die Wärme ein gasförmiges Medium, wie beispielsweise erwärmte Luft, oder aber auch flüssig sein. Die Wärme und/oder der Druck tritt aus dem Innenraum 19 über einen Wärmeauslass 20 in das Innere eines Schneckengehäuses 4. Dabei ist der Wärmeauslass 20 in eine Aussenhaut 21 als Öffnung, Nocke oder Ventil eingelassen.

Der erste Zylinder 5 weist eine Durchtrittsöffnung 23 in einer Zylinderwand 24 auf. Diese Durchtrittsöffnung 23 dient der weiteren Aufnahme von Flüssigkeit, die aus dem Ausgangsmaterial austritt oder an dem Ausgangsmaterial haftet.

Weiter ist zwischen der Zylinderwand 24 und der Antriebswelle 12 eine Innenschaufel 22 angeordnet, die die Flüssigkeit, welches aus dem Gehäuse 3 oder dem Schneckengehäuse 4 durch die Durchtrittsöffnung 23 tritt zu einem nicht näher gezeigten Flüssigkeitsabtransport leitet und von dort aus wird die Flüssigkeit aus der Recycling-Vorrichtung V verbracht.

Der erste Zylinder 5 weist ausserdem auf der Oberfläche eine erste Schaufel 13 auf. Die erste Schaufel 13 ist in diesem Ausführungsbeispiel als umlaufende Spirale angeordnet. Dabei ist die Bauhöhe der ersten Schaufel 3 derart angeordnet, dass sie sich im Bereich des Schneckengehäuses 4 zu einer Innenwand 16 erstreckt.

Der Trichter 6 weist von dem ersten Zylinder 5 zum dem zweiten Zylinder 7 hin einen sich vergrössernden Durchmesser auf. In diesem Zusammenhang weist der erste Zylinder 5 einen geringeren Durchmesser als der zweite Zylinder 7 auf. Der Trichter 6 weist auf seiner Oberfläche eine zweite Schaufel 14 auf, die ebenfalls spiralförmig angeordnet ist. Dabei reicht auch die zweite Schaufel 14 bis hin zu der Innenwand 16 des Schneckengehäuses 4. Durch den sich vom ersten Zylinder 5 zu dem zweiten Zylinder 7 erhöhenden Durchmesser des Trichters 6 verringert sich die Bauhöhe der zweiten Schaufel 14 von dem ersten Zylinder 5 und dem zweiten Zylinder 7 hin.

Der zweite Zylinder 7 weist eine dritte Schaufel 15 auf. Auch die dritte Schaufel 15 reicht bis zu der Innenwand 16 des Schneckengehäuses und dient der endphasigen Komprimierung des Ausgangsstoffes, um ihn aus den Auslasslöchern 28 des Auslasssiebs 17 zu drücken und um das Endprodukt zu erhalten.

### Bezugszeichenliste

| | | | |
|---|---|---|---|
| 1 | Förderschnecke | 34 | |
| 2 | Füllkammer | 35 | |
| 3 | Gehäuse | 36 | |
| 4 | Schneckengehäuse | 37 | |
| 5 | Erster Zylinder | 38 | |
| 6 | Trichter | 39 | |
| 7 | Zweiter Zylinder | 40 | |
| 8 | Erste Wärmesperre | 41 | |
| 9 | Zweite Wärmesperre | 42 | |
| 10 | Siebboden | 43 | |
| 11 | Antrieb | 44 | |
| 12 | Antriebswelle | 45 | |
| 13 | Erste Schaufel | 46 | |
| 14 | Zweite Schaufel | 47 | |
| 15 | Dritte Schaufel | 48 | |
| 16 | Innenwand | 49 | |
| 17 | Auslasssieb | 50 | |
| 18 | Wärmezuführeinrichtung | 51 | |
| 19 | Innenraum | 52 | |
| 20 | Wärmeauslass | 53 | |
| 21 | Aussenhaut | 54 | |
| 22 | Innenschaufel | 55 | |
| 23 | Durchtrittsöffnungen | 56 | |
| 24 | Zylinderwand | 57 | |
| 25 | Gehäuse-Einlass | 58 | |
| 26 | Zuführung | 59 | |
| 27 | Wärmeleitern | 60 | |
| 28 | Auslasslöcher | 61 | |
| 29 | | 62 | |
| 30 | | 63 | |
| 31 | | 64 | |
| 32 | | 65 | |
| 33 | | 66 | |

## Patentansprüche

1. Recycling-Vorrichtung (V) für ein Ausgangsmaterial mit einer Förderschnecke (1) und einer Füllkammer (2), wobei die Füllkammer (2) ein Gehäuse (3) aufweist und die Förderschnecke (1) aus dem Gehäuse (3) in ein Schneckengehäuse (4) hineinreicht, die Förderschnecke (1) einen Antrieb (11) und eine Antriebswelle (12) umfasst, die Förderschnecke (1) hohl ist, wobei die Förderschnecke (1) aus einem ersten Zylinder (5) mit einem geringeren Durchmesser, einem Trichter (6) ist und einem anschliessenden zweiten Zylinder (7) mit einem größeren Durchmesser besteht,
**dadurch gekennzeichnet, dass**
eine erste Wärmesperre (8) und/oder erste Drucksperre zwischen dem ersten Zylinder (5) und dem Trichter (6) und eine zweite Wärmesperre (9) und/oder zweite Drucksperre zwischen dem Trichter (6) und dem zweiten Zylinder (7) angeordnet ist, wobei der Trichter (6) eine Wärmezuführeinrichtung (18) und/oder Druckzuführeinrichtung in einem Innenraum (19) und einen Wärmeauslass (20) auf einer Aussenhaut (21) aufweist, wobei in dem ersten Zylinder (5) eine Innenschaufel (22) hin zu der Antriebswelle (12) angeordnet ist, wobei der erste Zylinder (5) Durchtrittsöffnungen (23) in der Zylinderwand (24) aufweist, wobei der erste Zylinder (5) einen Flüssigkeitsabtransport umfasst.

2. Recycling-Vorrichtung (V) nach Anspruch 1, **dadurch gekennzeichnet, dass** das Gehäuse (3) einen Siebboden (10) aufweist.

3. Recycling-Vorrichtung (V) nach einem der vorigen Ansprüche, **dadurch gekennzeichnet, dass** der erste Zylinder (5) eine erste Schaufel (13) aufweist, wobei der Trichter (6) eine zweite Schaufel (14) und der zweite Zylinder (7) eine dritte Schaufel (15) aufweist, wobei die erste Schaufel (13) und die zweite Schaufel (14) und die dritte Schaufel (15) bis zu einer Innenwand (16) des Schneckengehäuses (4) reichen, wobei ein Teil der ersten Schaufel (13) aus der Füllkammer (2) in das Schneckengehäuse (4) hineinreicht.

4. Recycling-Vorrichtung (V) nach einem der vorigen Ansprüche, **dadurch gekennzeichnet, dass** das Schneckengehäuse (4) endseitig eine Auslasssieb (17) aufweist.

5. Verfahren zur Durchführung eines Arbeitsdurchlaufs mit einer Recycling-Vorrichtung (V) für ein mit einer Flüssigkeit kontaminiertes verschmutztes Ausgangsmaterial nach einem der Ansprüche 1 bis 4, **gekennzeichnet durch** folgende Schritte:
- das verschmutzte Ausgansmaterial wird in die Füllkammer (2) gebracht;
- das verschmutzte Ausgangsmaterial wird mit der Förderschnecke (1) in Richtung des Auslasssiebs (17) befördert;
- das verschmutzte Ausgangsmaterial wird von dem ersten Zylinder (5) der Förderschnecke (1) erfasst und dabei mit Wärme und/oder Druck beaufschlagt;
- das verschmutzte Ausgangsmaterial wird anschliessend im Bereich des Trichters (6) weiter erwärmt und komprimiert, wobei die Wärme und/oder der Druck aus dem Innenraum (19) über den Wärmeauslass (20) in das Schneckengehäuse (4) tritt;
- anschliessend wird das verschmutzte Ausgangsmaterial durch den zweiten Zylinder (7) weiter komprimiert und tritt als Endprodukt aus dem Auslasssieb (17) aus;
- währenddessen tritt die Flüssigkeit aus dem Siebboden (10) des Gehäuses (3) und/oder aus dem Flüssigkeitsabtransport des ersten Zylinders (5) aus.

## Claims

1. Recycling device (V) for a starting material with a screw conveyor (1) and a filling chamber (2), wherein the filling chamber (2) has a housing (3) and the screw conveyor (1) extends from the housing (3) into a screw housing (4), the screw conveyor (1) comprises a drive (11) and a drive shaft (12), the screw conveyor (1) is hollow, wherein the screw conveyor (1) consists of a first cylinder (5) with a smaller diameter, a funnel (6) and an adjoining second cylinder (7) with a larger diameter,
**characterised in that**
a first heat barrier (8) and/or first pressure barrier is arranged between the first cylinder (5) and the funnel (6) and a second heat barrier (9) and/or second pressure barrier is arranged between the funnel (6) and the second cylinder (7), wherein the funnel (6) has a heat supply device (18) and/or pressure supply device in an internal space (19) and a heat outlet (20) on an outer skin (21), wherein an inner blade (22) is arranged in the first cylinder (5) towards the driving shaft (12), wherein the first cylinder (5) has through-openings (23) in the cylinder wall (24), wherein the first cylinder (5) comprises a liquid discharge.

2. Recycling device (V) according to claim 1, **characterized in that** the housing (3) has a screen bottom (10).

3. Recycling device (V) according to one of the previous claims, **characterized in that** the first cylinder (5) has a first blade (13), wherein the funnel (6) has a second blade (14) and the second cylinder (7) has a third blade (15), wherein the first blade (13) and the second blade (14) and the third blade (15) extend up to an inner wall (16) of the screw housing (4), wherein a part of the first blade (13) extends from the filling chamber (2) into the screw housing (4).

4. Recycling device (V) according to one of the previous claims, **characterized in that** the screw housing (4) has an outlet screen (17) at its end.

5. Method for carrying-out a working cycle with a recycling device (V) for a with a liquid contaminated, soiled, starting material according to one of the claims 1 to 4, **characterized by** the following steps:
- the soiled starting material is brought into the filling chamber (2);
- the soiled starting material is conveyed by the screw conveyor (1) towards the outlet screen (17);
- the soiled starting material is captured by the first cylinder (5) of the screw conveyor (1) and thereby exposed to heat and/or pressure;
- the soiled starting material is then further heated and compressed in the region of the funnel (6), wherein the heat and/or pressure from the internal space (19) entering the screw housing (4) via the heat outlet (20)
- Subsequently, the soiled starting material is further compressed by the second cylinder (7) and exits the outlet screen (17) as a final product;
- meanwhile the liquid exits from the screen bottom (10) of the housing (3) and/or from the liquid discharge of the first cylinder (5).

## Revendications

1. Dispositif de recyclage (V) pour un matériau de départ avec un convoyeur à vis (1) et une chambre de remplissage (2), dans lequel la chambre de remplissage (2) présente un boîtier (3) et le transporteur à vis (1) s'étend du boîtier (3) dans un boîtier à vis sans fin (4), le transporteur à vis (1) comporte un entraînement (11) et un arbre d'entraînement (12), le convoyeur à vis (1) est creux, dans lequel le convoyeur à vis (1) se compose d'un premier cylindre (5) de diamètre inférieur, d'un entonnoir (6) et d'un deuxième cylindre successif (7) de diamètre supérieur,
**caractérisé par le fait que**
une première barrière thermique (8) et/ou une première barrière de pression est disposée entre le premier cylindre (5) et l'entonnoir (6) et une deuxième barrière thermique (9) et/ou une deuxième barrière de pression est disposée entre l'entonnoir (6) et le deuxième cylindre (7), où l'entonnoir (6) présente un moyen d'alimentation de chaleur (18) et/ou un moyen d'alimentation de pression dans un espace intérieur (19) et une sortie de chaleur (20) sur une peau extérieure (21), où dans le premier cylindre (5) est disposée une pale intérieure (22) vers l'arbre d'entraînement (12), où le premier cylindre (5) présente des ouvertures de passage (23) dans la paroi du cylindre (24), où le premier cylindre (5) comporte une décharge de liquide.

2. Dispositif de recyclage (V) selon la revendication 1, **caractérisé par le fait que** le boîtier (3) comporte un fond de criblage (10).

3. Dispositif de recyclage (V) selon l'une des revendications précédentes, **caractérisé par le fait que** le premier cylindre (5) présente une première pale (13), dans lequel l'entonnoir (6) présente une deuxième pale (14) et le deuxième cylindre (7) présente une troisième pale (15), où la première pale (13) et la deuxième pale (14) et la troisième pale (15) atteignent une paroi intérieure (16) du boîtier à vis sans fin (4), où une partie de la première pale (13) s'étend de la chambre de remplissage (2) dans le boîtier à vis sans fin (4).

4. Dispositif de recyclage (V) selon l'une des revendications précédentes, **caractérisé par le fait que** le boîtier à vis sans fin (4) présente un tamis de sortie (17) du côté de l'extrémité.

5. Procédé pour réaliser un cycle de travail avec un dispositif de recyclage (V) pour un matériau de départ contaminé par un liquide selon l'une des revendications 1 à 4, **caractérisé par** les étapes suivantes:
- le matériau de départ contaminé est amené dans la chambre de remplissage (2);
- le matériau de départ contaminé est transporté par le convoyeur à vis (1) en direction du tamis de sortie (17);
- le matériau de départ contaminé est saisi par le premier cylindre (5) du transporteur à vis (1) et soumis à de la chaleur et/ou à de la pression;
- le matériau de départ contaminé est ensuite davantage chauffé et comprimé dans la zone de la trémie (6), où la chaleur et/ou la pression passe de l'espace intérieur (19) à travers la sortie de chaleur (20) dans le boîtier à vis sans fin (4);
- ensuite, le matériau de départ contaminé est davantage comprimé par le deuxième cylindre (7) et sort comme produit final du tamis de sortie (17);
- pendant ce temps, le liquide sort du fond de criblage (10) du boîtier (3) et/ou de la décharge de liquide du premier cylindre (5).
